# EUROPÄISCHE PATENTSCHRIFT

(11) **EP 0 827 720 B1**
(45) Veröffentlichungstag und Bekanntmachung des Hinweises auf die Patenterteilung: **22.09.2004**
(21) Anmeldenummer: 97113268.3
(22) Anmeldetag: 31.07.1997
(51) Int. Cl.: A61C 5/00

(54) **Applikationsanordnung für Zahnersatzteile sowie Verpackungseinrichtung**
Manipulation assembly for dental restaurations as well as packaging device
Ensemble de manipulation pour restaurations dentaires, ainsi que son dispositif d'emballage

(30) Priorität: 06.09.1996 DE 19636281
(43) Veröffentlichungstag der Anmeldung: 11.03.1998
(73) Patentinhaber: Ivoclar Vivadent AG, 9494 Schaan (LI)
(72) Erfinder: Müller, Frank, A-6833 Klaus. (AT)
(74) Vertreter: Baronetzky, Klaus, Dipl.-Ing.

(56) Entgegenhaltungen:
- EP-A- 0 190 936
- DE-A- 4 439 410
- GB-A- 388 614
- US-A- 4 747 776
- US-A- 5 221 202

## Beschreibung

Die Erfindung betrifft eine Applikationsanordnung gemäß dem Oberbegriff von Anspruch 1 sowie eine Verpackungseinrichtung gemäß dem Oberbegriff von Anspruch 12.

Eine derartige Applikationsanordnung ist in der deutschen Patentanmeldung 196 02 500.1 vorgeschlagen worden. Ein Insert oder ein Inlay weist für die Handhabung einen Haltevorsprung auf, der dafür bestimmt ist, eine Halterung an einem Handhalter zu gewährleisten, damit das ziemlich kleine und insofern schlecht zu handhabende Inlay oder Insert aus einer Verpackung entnommen werden kann und in eine vorgefertigte Kavität in einem zu restaurierenden Zahn eingebracht werden kann. Beispielsweise kann das Insert oder Inlay 1 mm dick sein, und eine Länge und Breite von 3 mm aufweisen. Aufgrund der geringen Größe und vergleichsweise schlechten Handhabbarkeit mit einer Pinzette, die das Insert an ihren Breitseiten greifen könnte, ist es bekannt geworden, das Insert oder Inlay mit einem Haltevorsprung zu versehen, der nach der Art eines Stieles ausgebildet ist und nach dem fertigen Einsetzen und Einzementieren des Inserts oder Inlays abgeschliffen wird.

Ein derartiger runder Haltevorsprung ist jedoch für den Zugriff einer Pinzette schlecht geeignet, nachdem es auf eine exakte Positionierung insbesondere eines Inserts ankommt. Daher ist es bekannt geworden, beispielsweise aus der DE-OS 44 39 410, einen Handhalter zu verwenden, der mittels eines Klemmelements aus einem elastischen Material den Haltevorsprung und damit das Zahnersatzteil halten soll. Das Klemmelement weist eine gewisse Presspassung auf dem Haltevorsprung auf, die zwar die Lagerung etwas verbessert, jedoch das Einstecken des Haltevorsprungs mittels des Inserts oder Inlays erschwert.

Ferner besteht die Gefahr, daß trotz der Klemmwirkung des Klemmelements das Insert oder Inlay durch ein versehentliches Anstoßen im Mund des Patienten verlorengeht und verschluckt wird oder sogar aspiriert wird. Daher muß bei dieser Lösung sicherheitshalber die Klemmwirkung ziemlich groß gemacht werden, was jedoch das Herauslösen bei fertig eingesetztem Insert oder Inlay erschwert, nachdem in dieser Position nach Möglichkeit keine Ortsveränderung des Zahnersatzteils mehr erfolgen sollte.

Ein weiteres Problem bei diesem bekannten Zahnersatzteil besteht darin, daß das Einsetzen des Haltevorsprunges in das Klemmelement aufgrund dessen Untermaß nicht gerade leicht ist. In diesem Zusammenhang besteht das Problem, daß die Zahnersatzteile steril bleiben sollten. Gegebenenfalls sind sie sogar mit einer Silanschicht überzogen, so daß sie keinesfalls von Hand berührt werden dürfen, um den Verbund zum Komposit-Material nicht zu gefährden. Ein derartiges Zahnersatzteil ist bereits in der vorstehend genannten deutschen Patentanmeldung P 196 02 500.1 vorgeschlagen worden.

Aus US-A-5 221 202 ist eine Verpackungsanordung bekannt, die als Ringdose ausgebildet ist, an deren Umfang Einzelkammen für orthodortisches Backet in form von Vertiefungen sind.

Daher liegt der Erfindung die Aufgabe zugrunde, eine Applikationsanordnung sowie eine Verpackungseinrichtung gemäß dem Oberbegriff der Ansprüche 1 bzw. 12 zu schaffen, die eine unfallsicherere, aber dennoch bequemere, kostengünstigere und hygienisch einwandfreie Handhabung erlaubt, und die den Anforderungen der Praxis gerecht wird.

Diese Aufgabe wird erfindungsgemäß durch die Ansprüche 1 bzw. 12 gelöst. Vorteilhafte Weiterbildungen ergeben sich aus den Unteransprüchen.

Die erfindungsgemäße Applikationsanordnung zeichnet sich zunächst dadurch aus, daß eine für das Zahnersatzteil berührungsfreie und insofern sterile Handhabung möglich ist. Hierzu wird der Handhalter auf den erfindungsgemäßen Adapter an dessen Schaft aufgesteckt. Der Schaft des Adapters hält sicher in einer entsprechenden Öffnung des Handhalters, wobei das Aufstecken in einer erfindungsgemäßen Weiterbildung bevorzugt in zwei Positionen möglich ist, die als distale und als mesiale Positionen eingesetzt werden, je nachdem, ob das Insert an einer distalen oder an einer mesialen Seite des Zahnes eingesetzt werden soll.

Die erfindungsgemäße Applikationsanordnung sieht vor, daß der Haltevorsprung des Zahnersatzteils in der Ausnehmung des Adapters gehalten ist. Vorzugsweise sind die Zahnersatzteile Inserts oder Inlays. Insbesondere wird der Haltevorsprung formschlüssig in der Ausnehmung des Adapters gehalten. Hierdurch ist es möglich, die Klemmwirkung soweit zu reduzieren, daß auch die Klemmkraft gegenüber einer rein kraftschlüssigen Verbindung auf das noch erforderliche Minimum reduziert ist. Das Einsetzen des Inserts oder Inlays erfolgt bevorzugt mit einer leichten Drehbewegung, die die elastischen Wände der Halterausnehmung des Adapters etwas aufspreizt und den Haltevorsprung leicht freigibt. Es versteht sich, daß der seitliche Druck hierbei stets in Richtung des zu restaurierenden Zahnes erfolgen sollte, um ein Lösen des Inserts von dem Zahn zu vermeiden. Diese Bewegung entspricht im wesentlichen einer "Spachtelbewegung" und stellt den Zahnarzt vor keine besonderen und ungewohnten Anforderungen.

Gemäß einer alternativen Handhabung ist es vorgesehen, das Insert oder Inlay mittels einer Pinzette oder dergleichen lediglich anzudrücken und dann das Lösen der Adapterausnehmung von dem Haltevorsprung durch eine lediglich sehr leichte Kipp- und Zugbewegung des Handhalters zu gewährleisten. Der Adapter dient als Kupplung zwischen dem Haltevorsprung des Zahnersatzteils und dem Handhalter. Im Prinzip ist jede Verbindung zwischen Adapter und den beiden anderen Teilen möglich, die eine lösbare Befestigung darstellt.

In einer besonders bevorzugten Ausgestaltung ist es vorgesehen, daß der Haltevorsprung im wesenlichen pilzförmig ausgebildet ist. Aufgrund des kreisrunden Durchmessers kann dann die Kippbewegung in jeder beliebigen geeigneten Richtung erfolgen, und die zwischen dem Halsbereich des Haltevorsprungs und dem entsprechenden Bereich der Ausnehmung vorgesehene Presspassung erfordert einen lediglich ziemlich geringen Anpressdruck, der nur etwas über eine Anlage hinausgeht und dazu dient, daß der Haltevorsprung spielfrei gehalten ist.

Es versteht sich, daß die Haltekraft des Schaftes in dem Handhalter so gewählt ist, daß das erforderliche Manövrieren des Adapters mit eingesetztem Zahnersatzteil risikolos möglich ist, so daß also stets die Haltekraft des Adapters im Handhalter größer als die Haltekraft des Zahnersatzteils im Adapter ist. Hierbei kann besonders günstig die Tatsache ausgenutzt werden, daß bei der erfindungsgemäßen Verpackungsanordnung Einzelkammern vorgesehen sein können, die der sicheren Abstützung des Adapters dienen, so daß auf die Verpackungsanordnung beim Anstecken des Adapters an dem Handhalter ohne weiteres ein beträchtlicher Druck ausgeübt werden kann, ohne daß das - sterile - Zahnersatzteil hiervon beeinflußt wird. Vorzugsweise wird der Adapter auf den Haltevorsprung des Zahnersatzteils aufgesetzt, wonach das Zahnersatzteil einem Silanisierungsbad zugeführt und anschließend in die Verpackungsanordnung einigesetzt wird.

In diesem Zusammenhang ist es besonders günstig, wenn das Zahnersatzteil berührungslos in einer Einzelkammer gelagert und der Adapter auf bevorzugt konischen Stützflächen sicher abgestützt ist.

Gemäß einer weiteren, besonders bevorzugten Ausgestaltung weist die Verpackungseinrichtung eine Verpackungsdose auf, deren Einzelkammern selektiv freigebbar sind. Ein Deckel läßt sich beispielsweise schieben, wenn eine rechteckige Verpakkungsdose verwendet wird, oder verdrehen, wenn eine runde Verpackungsdose verwendet wird und weist eine Entnahmeöffnung auf, die je genau eine Einzelkammer freigibt, die den Zugriff auf die Kombination von Adapter und Zahnersatzteil ermöglicht.

Bevorzugt ist es vorgesehen, daß die Verpackungseinrichtung in dem Lieferzustand in jeder Einzelkammer eine Kombination eines Adapters mit dort aufgehängtem Zahnersatzteil trägt. Gemäß einer weiteren besonders bevorzugten Ausgestaltung ist der Adapter aus durchsichtigem oder zumindest durchscheinendem Kunststoffmaterial ausgebildet. Er kann nach Applikation des Zahnersatzteils wieder in die leere Einzelkammer eingesetzt werden. Von oben ist dann ersichtlich, ob das Zahnersatzteil bereits entnommen wurde.

Gemäß einer anderen Ausgestaltung ist die Verpackungsdose in dem seitlichen, dem Zahnersatzteil benachbarten Bereich durchsichtig, so daß hierdurch eine Überprüfung erfolgen kann, ob das Zahnersatzteil noch vorhanden ist, oder lediglich ein leerer Adapter vorliegt. Die so ausgestaltete Verpackungseinrichtung ermöglicht es sogar, die Verpackungsdose samt den zugehörigen Adaptern - nach dem erforderlichen Sterilisieren - wiederzuverwenden. Die Adapter können vormontiert zusammen mit dem Insert geliefert werden. Sie können farbcodiert sein, um z.B. auf die Form oder die Farbe des Inserts hinzuweisen.

Weitere Einzelheiten, Vorteile und Merkmale ergeben sich aus der nachfolgenden Beschreibung eines Ausführungsbeispiels anhand der Zeichnung.

Es zeigen:
- Fig. 1: eine perspektivische Ansicht einer Ausführungsform eines erfindungsgemäßen Adapters;
- Fig. 2: eine perspektivische Ansicht eines erfindungsgemäßen Adapters mit eingesetztem Zahnersatzteil als Teil der Applikationsanordnung;
- Fig. 3: eine perspektivische Ansicht einer erfindungsgemäßen Verpackungsanordnung vor dem Zusammensetzen;
- Fig. 4: eine Schnittansicht einer erfindungsgemäßen Applikationsanordnung vor der Anbringung des Handhalters, noch in der Einzelkammer einer erfindungsgemäßen Verpakkungsanordnung aufgenommen.

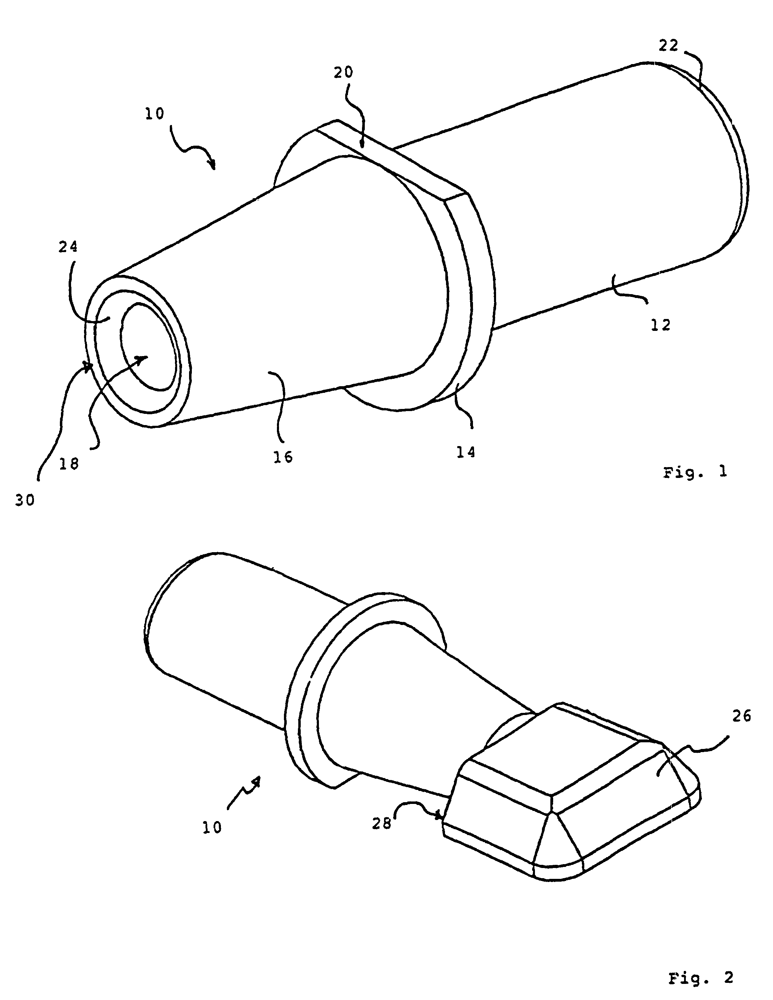

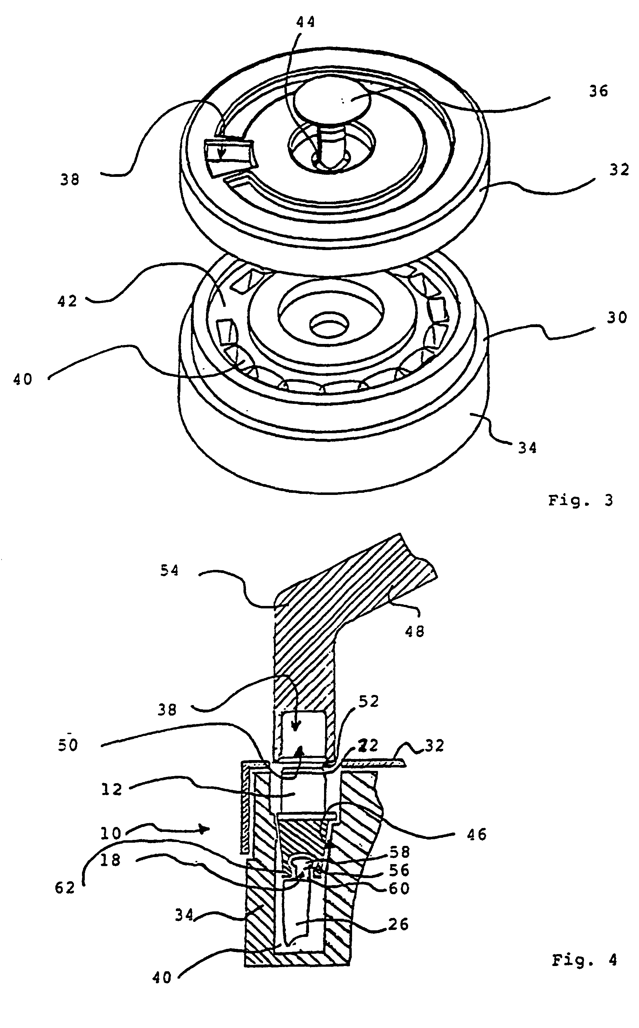

Die in Fig. 1 dargestellte Ausführungsform eines Adapters 10 weist einen Anschluß oder Schaft 12 für einen in Fig. 4 dargestellten Handhalter, einen Flansch 14, einen Außenkonus 16 sowie eine Ausnehmung 18 für die Aufnahme eines in Fig. 2 dargestellten Zahnersatzteils auf. Der Anschluß 12 ist elliptisch ausgebildet und paßt zu einer entsprechenden Ausnehmung in dem Handhalter, wobei es sich versteht, daß zwei Steckpositionen möglich sind, die sich um 180° voneinander unterscheiden. Die Steckpositionen werden als mesial und distal bezeichnet und dienen der besseren Handhabung, je nachdem ob ein Insert im mesialen oder distalen Bereich eines Molaren oder Prämolaren eingesetzt werden sollen. Der Flansch 14 dient als Anschlag für die Steckposition des Handhalters und weist eine Abflachung 20 auf, mit welcher die Steckposition von außen deutlich sichtbar ist. Der Anschluß 12 weist ferner eine Einführschräge 22 auf, die das Anstecken an dem Handhalter erleichtert.

Der Bereich des Außenkonus 16 ist ziemlich schlank gehalten, wobei auch der Handhalter einen Durchmesser aufweist, der den Durchmesser des Flansches 14 nicht oder höchstens um weniges überschreitet. Die Abflachung 20 dient zugleich zur verdrehsicheren Aufnahme des Zahnersatzteils in einer Einzelkammer der Verpackungsdose, wie es aus Fig. 4 ersichtlich ist. Insgesamt ergibt sich so eine schlanke Anordnung der Applikationsanordnung, die die Handhabung verbessert.

Auch die Ausnehmung 18 weist eine Einführschräge in Form eines Innenkonus 24 auf, der bei der herstellungsseitigen Vorbereitung der erfindungsgemäßen Applikationsanordnung das Einführen des Zahnersatzteils erleichtert.

Aus Fig. 2 ist ersichtlich, wie ein Zahnersatzteil, hier in Form eines Inserts 26, an dem Adapter 10 gehalten ist. Ein in Fig. 2 nicht ersichtlicher Haltevorsprung des Inserts 26 erstreckt sich in die Ausnehmung 18, so daß das Insert 26 mit seiner Oberseite bündig an eine Stirnfläche 30 (Fig. 1) des Adapters 10 anstößt. In dieser Position ist das Insert 26 sicher an dem Adapter gehalten. Der Adapter ist bevorzugt aus einem Kunststoffmaterial ausgebildet, das weichelastisch ist, beispielsweise aus entsprechend eingestelltem Polypropylen oder aus Polyäthylen.

Gemäß einer anderen Ausgestaltung sind die Adapterteile zur Unterscheidung von Insert/Inlay-Form bzw. Insert/Inlay-Größe unterschiedlich eingefärbt, und gemäß einer dritten Ausführungsform betreffend die unterschiedlichen Einfärbungen der Adapter die Unterscheidung der Zahnfarbe des Inserts bzw. des Inlays.

Das Insert 26 ist bevorzugt in der in Fig. 4 dargestellten Verpackungsanordnung steril verpackt und gegebenenfalls mit einer Silanschicht überzogen, um einen verbesserten Verbund zum Kompositmaterial zu gewährleisten. Die schlanke Formgebung der Kombination aus Handhalter, Adapter 10 und Insert 26 erlaubt dem Zahnarzt auch, die Handhabung gut zu beobachten, nachdem die Sicht nicht versperrt ist.

Grundsätzlich kommt für die Handhabung der erfindungsgemäßen Applikationsanordnung eine beliebige Verpackungseinrichtung in Frage, beispielsweise ein Peelbeutel oder dergleichen. Erfindungsgemäß bevorzugt ist die in Fig. 3 dargestellte Verpakkungseinrichtung, die eine Verpackungsdose 30 zeigt, die im Beispielsfalle rund ist, jedoch gleichermaßen auch als rechteckige Verpackung mit einem Schiebedeckel ausgebildet sein kann. Die Verpackungsdose 30 umfaßt einen Drehdeckel 32 und einen Dosenkörper 34, die über einen Verbindungsklip 36 miteinander drehbar verbunden sind. Der Drehdeckel 32 weist eine Entnahmeöffnung 38 auf, die über die Drehbewegung des Drehdekkels so verdrehbar ist, daß sie genau eine Einzelkammer freigibt und alle übrigen Einzelkammern, die als Vertiefungen in dem Dosenkörper 34 ausgebildet sind, abdeckt. Jede Einzelkammer 40 ist für die Aufnahme einer Kombination aus einem Adapter 10 und einem Zahnersatzteil 26 bestimmt, wie es aus Fig. 4 besser ersichtlich ist. Zusätzlich ist ein einzelkammerfreier Bereich 42 vorgesehen, der eine Schließstellung des Drehdekkels 32 erlaubt, in welcher keine Einzelkammer freigegeben ist.

Der Verbindungsclip 36 ist gerastet an dem Dosenkörper 34 gehalten und durchtritt eine Zentralöffnung 44 des Drehdeckels 32, so daß der Drehdeckel 32 unverlierbar auf dem Dosenkörper 30 gehalten ist, sich jedoch bei Bedarf leicht drehen läßt.

Der Drehdeckel 32 kann gegebenenfalls einen Rastvorsprung aufweisen, der aus Fig. 3 nicht ersichtlich ist und eine zu einer Einzelkammer passende Breite hat, so daß die Entnahmeöffnung 38 stets in einer Rastposition einrastet, wenn eine Einzelkammer 40 freigegeben sein soll. Es versteht sich, daß dann bevorzugt der Bereich 42 ebenfalls eine Vertiefung aufweist, um eine entsprechende Rastposition bei allen Einzelkammern 40 zu ermöglichen.

Auch wenn in Fig. 3 die Einzelkammern 40 als eckige Ausnehmungen, die konisch zulaufen, dargestellt sind, ist es bevorzugt, daß die Einzelkammern 40 die aus Fig. 4 ersichtliche, im wesentlichen runde Ausgestaltung mit einer leichten Abflachung an einer Seite aufweisen, wobei bevorzugt der obere Bereich jeder Einzelkammer 40 eine Anlagefläche 46 für den Außenkonus 16 bildet. Der Außenkonus 16 ist dann auf einer solchen Höhe aufgehängt, daß das Zahnersatzteil 26 frei in der Einzelkammer 40 hängt und berührungsfrei entnehmbar ist.

Wie aus Fig. 4 ersichtlich ist, ist hierzu ein von dem Adapter 10 separater Handhalter 48 vorgesehen, der eine Ausnehmung 50 aufweist, in welcher der Schaft 12 des Adapters 10 aufnehmbar ist. Sowohl die Ausnehmung 50 als auch der Schaft 12 sind elliptisch und weisen entsprechende Einführschrägen 22 und 52 auf. Der Handhalter 48 ist in Fig. 4 lediglich teilweise dargestellt und aus Gründen der Vereinfachung der Handhabung in einem Winkelbereich 54 abgewinkelt, und zwar bevorzugt um etwa 70°.

Wie aus Fig. 4 ersichtlich ist, weist das Zahnersatzteil 26 einen Haltevorsprung 56 auf, der sich in der Ausnehmung 18 des Adapters 10 erstreckt. Der Haltevorsprung ist formschlüssig in der Ausnehmung 18 gehalten und weißt einen pilzförmigen Kopfbereich 58 sowie einen Halsbereich 60 auf, der von entsprechenden Bereichen der Ausnehmung gehalten ist. Der Haltevorsprung 56 kann bevorzugt ebenfalls verdrehsicher in der Ausnehmung 18 gehalten sein, was durch eine von der Kreisform abweichende Formgebung leicht zu erreichen ist. Der Adapter 10 ist aufgrund seiner Verjüngung über den Außenkonus 16 in seinem vorderen Bereich vergleichsweise nachgiebig, so daß die erfindungsgemäße Betätigung mit dem Auslösen des Zahnersatzteils 26 in dem in die Kavität eingesetzten Zustand durch Aufbiegen von Greifklauen 62 des Adapters ohne weiteres möglich ist. Die Greifklauen 62 bilden eine Hinterschneidung in der Ausnehmung 18 des Adapters 10. Bei entsprechender Übung läßt sich mit einer ganz leichten Kippbewegung das Zahnersatzteil sicher auslösen und der Adapter kann anschließend in durch die Entnahmeöffnung 38 freigegebene Einzelkammer 40 eingesetzt werden.

Es versteht sich, daß anstelledessen auch eine einteilige Verpackungsdose einsetzbar ist, wobei die Verpackungsdose 30 oder der Drehdeckel 32 zur Unterscheidung auch unterschiedlich eingefärbt oder farblich entsprechend gestaltet sein können.

## Patentansprüche

1. Handhalter zum Halten eines Zahnersatzteiles (26) von Hand, welches einen Haltevorsprung (56) aufweist, wobei ein Adapter (10) vorgesehen ist, der eine Ausnehmung (18) aufweist, die für das Zusammenwirken mit dem Haltevorsprung (56) des Zahnersatzteiles (26) bestimmt ist und mit welcher der Haltevorsprung (56) haltbar ist, **dadurch gekennzeichnet, dass** der Adapter (10) einen mit dem Handhalter (48) lösbar verbindbaren Anschluss (12) aufweist.

2. Handhalter nach Anspruch 1, **dadurch gekennzeichnet, dass** das Zahnersatzteil (26) als Insert oder Inlay ausgebildet ist und dass der Haltevorsprung (56) lösbar und insbesondere formschlüssig in der Ausnehmung (18) des Adapters (10) haltbar ist und insbesondere als Kupplung zwischen Handhalter (48) und Haltevorsprung (56) dient.

3. Handhalter nach Anspruch 1, **dadurch gekennzeichnet, dass** der Adapter (10) im Bereich der Ausnehmung (18) eine Hinterschneidung aufweist, die für den Eingriff an einer hier zu passenden Hinterschneidung des Haltevorsprungs (56) bestimmt ist.

4. Handhalter nach einem der vorhergehenden Ansprüche, **dadurch gekennzeichnet, dass** der Adapter (10) an seinem dem Anschluss (12) für den Handhalter (48) gegenüberliegenden Ende die Ausnehmung (18) aufweist und dass der Adapter (10) mindestens im Bereich der Ausnehmung (18) aus einem elastischen Werkstoff ausgebildet ist.

5. Handhalter nach einem der vorhergehenden Ansprüche, **dadurch gekennzeichnet, dass** der Haltevorsprung (56) in der Ausnehmung (18) formschlüssig, kraftschlüssig oder sowohl form- als auch kraftschlüssig gehalten ist.

6. Handhalter nach einem der vorhergehenden Ansprüche, **dadurch gekennzeichnet, dass** der Haltevorsprung (56) und die Ausnehmung (18) je pilzförmig ausgebildet sind.

7. Handhalter nach einem der vorhergehenden Ansprüche, **dadurch gekennzeichnet, dass** der Haltevorsprung (56) des Zahnersatzteils (26) einen Kopfbereich (58) und einen Halsbereich (60) aufweist, die in entsprechenden Bereichen der Ausnehmung (18) aufnehmbar sind, wobei der Kopfbereich (58) gegenüber der Ausnehmung (18) in Spielpassung und der Halsbereich (60) in Presspassung in der Ausnehmung (18) haltbar sind.

8. Handhalter nach einem der vorhergehenden Ansprüche, **dadurch gekennzeichnet, dass** das Zahnersatzteil (26) in dem Adapter (10) bei der berührungsfreien Handhabung unverlierbar haltbar ist und durch Verschwenken des Adapters (10) gegenüber dem Zahnersatzteil (26) nach Einführen in eine Kavität eines zu füllenden Zahnes mittels seitlichen Andrückens in oder an der Kavität lösbar ist.

9. Handhalter nach einem der vorhergehenden Ansprüche, **dadurch gekennzeichnet, dass** der Adapteranschluss als Steckanschluss (12) für den Handhalter (48) ausgebildet ist, der insbesondere eine kraftschlüssige Verbindung zwischen dem Adapter (10) und dem Handhalter (48) bietet.

10. Handhalter nach einem der vorhergehenden Ansprüche, **dadurch gekennzeichnet, dass** ein Steckanschluss (12) zwischen dem Adapter (10) und dem Handhalter (48) zwei Steckpositionen erlaubt, die insbesondere um etwa 180° gegeneinander versetzt sind.

11. Handhalter nach einem der vorhergehenden Ansprüche, **dadurch gekennzeichnet, dass** der Handhalter (48) aus einem formstabilen Material ausgebildet ist, das insbesondere fester als das Material des Adapters (10) ist und einen Handgriff aufweist, wobei ein vorderer Abschnitt des Handhalters gegenüber dem Handgriff abgewinkelt ist, insbesondere in einem Winkel von etwa 70°.

12. Verpackungseinrichtung für die Aufnahme einer Mehrzahl von Zahnersatzteilen, wobei jedes Zahnersatzteil (26) einen Haltevorsprung (58) aufweist, der für die Aufnahme in einer Ausnehmung (18) eines Adapters (10) bestimmt ist, wobei der Adapter (10) an seinem gegenüberliegenden Ende einen über eine Verpackungsdose (30) selektiv freigebbaren Steckanschluss (12) aufweist, mit dem ein Handhalter (48) lösbar vorbindbar ist, und wobei die Verpackungsdose (30) mehrere Einzelkammern (40) in Form von Vertiefungen aufweist und in jeder Einzelkammer (40) eine Einheit aus einem Zahnersatzteil (26) und einem Adapter (10) aufnehmbar ist.

13. Verpackungseinrichtung nach Anspruch 12, **dadurch gekennzeichnet, dass** die Verpackungsdose (30) als Ringdose ausgebildet ist, an deren Umfang die Einzelkammern (40) ausgebildet sind.

14. Verpackungseinrichtung nach einem der Ansprüche 12 oder 13, **dadurch gekennzeichnet, dass** die Verpackungsdose (30) einen Deckel (32) aufweist, der selektiv eine Einheit aus einem Adapter (10) und einem Zahnersatzteil (26) über eine Entnahmeöffnung (38) freigibt, während die weiteren Einheiten abgedeckt sind.

15. Verpackungseinrichtung nach Anspruch 14, **dadurch gekennzeichnet, dass** der Deckel (32) der Verpackungsdose (30) in eine Position schwenkbar ist, in welcher sich unterhalb der Entnahmeöffnung (38) ein einzelkammerfreier Bereich (42) der Verpackungsdose (30) erstreckt.

16. Verpackungseinrichtung nach einem der Ansprüche 12 bis 15, **dadurch gekennzeichnet, dass** der Adapter (10) in der Verpackungsdose (30) abgestützt und das Zahnersatzteil (26) berührungsfrei in einer Vertiefung, insbesondere einer Einzelkammer, gelagert ist.

17. Verpackungseinrichtung nach Anspruch 16, **dadurch gekennzeichnet, dass** die Verpackungsdose (30) konische oder sich schräg nach oben erstreckende Stützflächen (46) für den Adapter (10) und der Adapter (10) entsprechende Anlageflächen aufweist.

18. Verpackungseinrichtung nach einem der Ansprüche 12 bis 17, **dadurch gekennzeichnet, dass** jeder Adapter (10) eine solche Ausgestaltung an dem Anschluss (12) für den Handhalter (48) und an der Ausnehmung (18) für das Zahnersatzteil (26) aufweist, dass die Haltekraft zum Handhalter (48) stets größer als die Haltekraft zum Zahnersatzteil (26) ist.

19. Verpackungseinrichtung nach einem der Ansprüche 12 bis 18, **dadurch gekennzeichnet, dass** der Schaft (12) des Adapters (10) für das Einstecken in eine Schaftausnehmung (50) des Handhalters (48) bestimmt ist und insbesondere mit einer Einführschräge (52) versehen ist.

20. Verpackungseinrichtung nach einem der Ansprüche 12 bis 19, **dadurch gekennzeichnet, dass** die Adapter (10) vormontiert zusammen mit dem Zahnersatzteil (26) in die Verpackungseinrichtung eingebracht sind und insbesondere farbcodiert sind, um auf Form und/oder Farbe des Zahnersatzteils (26) hinzuweisen.

21. Verpackungseinrichtung nach einem der Ansprüche 12 bis 20, **dadurch gekennzeichnet, dass** jedes Zahnersatzteil (26) nur mit Hilfe eines Handhalters (48) entnehmbar ist.

## Claims

1. A holder for holding a dental replacement part (26) by hand, which has a retaining projection (56), wherein an adapter (10) is provided which has a recess (18) which is intended for co-operation with the retaining projection (56) of the dental replacement part (26) and with which the retaining projection (56) can be retained, **characterised in that** the adapter (10) has a connection (12) which can be releasably connected to the holder (48).

2. A holder according to Claim 1, **characterised in that** the dental replacement part (26) is in the form of an insert or inlay, and **in that** the retaining projection (55) can be retained releasably and in particular in a form-locking manner in the recess (18) of the adapter (10) and in particular serves as a coupling between the holder (48) and the retaining projection (56).

3. A holder according to Claim 1, **characterised in that** in the vicinity of the recess (18) the adapter (10) has an undercut which is intended for engagement on an undercut of the retaining projection (56) to be fitted here.

4. A holder according to any one of the preceding Claims, **characterised in that** at its end opposite the connection (12) for the holder (48) the adapter (10) has the recess (18), and **in that** the adapter (10) is formed from an elastic material at least in the vicinity of the recess (18).

5. A holder according to any one of the preceding Claims, **characterised in that** the retaining projection (56) is retained in the recess (18) in a form-locking manner, in a force-locking manner or in both a form-locking and force-locking manner.

6. A holder according to any one of the preceding Claims, **characterised in that** the retaining projection (56) and the recess (18) are each mushroom-shaped.

7. A holder according to any one of the preceding Claims, **characterised in that** the retaining projection (56) of the dental replacement part (26) has a head zone (58) and a neck zone (60), which can be accommodated in corresponding zones of the recess (18), wherein the head zone (58) can be retained in a clearance fit relative to the recess (18) and the neck zone (60) can be retained in a force fit in the recess (18).

8. A holder according to any one of the preceding Claims, **characterised in that** the dental replacement part (26) can be retained captive in the adapter (10) with contact-free handling and can be released by pivoting the adapter (10) relative to the dental replacement part (26) after being introduced into a cavity of a tooth to be filled by means of lateral pressing into or on to the cavity.

9. A holder according to any one of the preceding Claims, **characterised in that** the adapter connection is in the form of a plug-and-socket connection (12) for the holder (48), which in particular provides a force-locking connection between the adapter (10) and the holder (48).

10. A holder according to any one of the preceding Claims, **characterised in that** a plug-and-socket connection (12) between the adapter (10) and the holder (48) allows two plug-in positions which are offset relative to one another in particular by approximately 180°.

11. A holder according to any one of the preceding Claims, **characterised in that** the holder (48) is formed from a dimensionally stable material which in particular is more resistant than the material of the adapter (10) and has a handle, wherein a front section of the holder is bent with respect to the handle, in particular at an angle of approximately 70°.

12. A packaging means for accommodating a plurality of dental replacement parts, wherein each dental replacement part (26) has a retaining projection (58) which is intended for accommodation in a recess (18) of an adapter (10), wherein at its opposite end the adapter (10) has a plug-and-socket connection (12) which can be selectively released via a packaging box (30), to which a holder (48) can be releasably connected, and wherein the packaging box (30) has a plurality of individual compartments (40) in the form of recesses and each individual compartment (40) can accommodate a unit comprising one dental replacement part (26) and one adapter (10).

13. A packaging means according to Claim 12, **characterised in that** the packaging box (30) is in the form of an annular box, on the periphery of which the individual compartments (40) are formed.

14. A packaging means according to either Claim 12 or Claim 13, **characterised in that** the packaging box (30) has a lid (32) which selectively releases via a discharge opening (38) a unit comprising one adapter (10) and one dental replacement part (26), while the other units are covered.

15. A packaging means according to Claim 14, **characterised in that** the lid (32) of the packaging box (30) can be pivoted into a position in which a portion (42) of the packaging box (30) free of individual compartments extends under the discharge opening (38).

16. A packaging means according to any one of Claims 12 to 15, **characterised in that** the adapter (10) is supported in the packaging box (30) and the dental replacement part (26) is mounted without contact in a recess, particularly an individual compartment.

17. A packaging means according to Claim 16, **characterised in that** the packaging box (30) has conical or obliquely upward extending support surfaces (46) for the adapter (10) and the adapter (10) has corresponding abutment surfaces.

18. A packaging means according to any one of Claims 12 to 17, **characterised in that** each adapter (10) is of such a configuration at the connection (12) for the holder (48) and on the recess (48) for the dental replacement part (26) that the retaining force for the holder (48) is always greater than the retaining force for the dental replacement part (26).

19. A packaging means according to any one of Claims 12 to 18, **characterised in that** the shank (12) of the adapter (10) is intended for insertion into a shank recess (50) of the holder (48) and in particular is provided with an insertion bevel (52).

20. A packaging means according to any one of Claims 12 to 19, **characterised in that** the adapters (10) are introduced, preassembled together with the dental replacement part (26), into the packaging means and, in particular, are colour-coded so as to indicate the shape and/or colour of the dental replacement part (26).

21. A packaging means according to any one of Claims 12 to 20, **characterised in that** each dental replacement part (26) can only be removed by means of a holder (48).

## Revendications

1. Porte-objets pour tenir manuellement un élément de restauration dentaire (26) présentant une protubérance de retenue (56), dans lequel est prévu un adaptateur (10) qui présente un évidement (18) destiné à agir conjointement avec la protubérance de retenue (56) de l'élément de restauration dentaire (26) et avec lequel on peut saisir la protubérance de retenue (56), **caractérisé en ce que** l'adaptateur (10) présente un raccord (12) pouvant être assemblé avec le porte-objets (48) de manière amovible.

2. Porte-objets selon la revendication 1, **caractérisé en ce que** l'élément de restauration dentaire (26) est réalisé sous forme d'insert ou d'inlay et que la protubérance de retenue (56) peut être retenue de manière amovible et en particulier par emboîtement dans l'évidement (18) de l'adaptateur (10) et qu'elle sert en particulier d'élément de couplage entre le porte-objets (48) et la protubérance de retenue (56).

3. Porte-objets selon la revendication 1, **caractérisé en ce que** l'adaptateur (10) présente une contre-dépouille dans la zone de l'évidement (18) qui est destinée à s'engager dans une contre-dépouille de la protubérance de retenue (56) correspondante.

4. Porte-objets selon l'une quelconque des revendications précédentes, **caractérisé en ce que** l'adaptateur (10) présente l'évidement (18) au niveau de son extrémité à l'opposé du raccord (12) pour le porte-objets (48) et que l'adaptateur (10) est réalisé, au moins dans la zone de l'évidement (18), dans une matière élastique.

5. Porte-objets selon l'une quelconque des revendications précédentes, **caractérisé en ce que** la protubérance de retenue (56) est maintenue dans l'évidement (18) par emboîtement, par enfoncement forcé ou également à la fois par emboîtement et par enfoncement forcé.

6. Porte-objets selon l'une quelconque des revendications précédentes, **caractérisé en ce que** la protubérance de retenue (56) et l'évidement (18) sont chacun en forme de champignon.

7. Porte-objets selon l'une quelconque des revendications précédentes, **caractérisé en ce que** la protubérance de retenue (56) de l'élément de restauration dentaire (26) présente une zone de tête (58) et une zone de col (60), qui peuvent être logées dans les zones correspondantes de l'évidement (18), la zone de tête (58) pouvant être retenue selon un ajustement avec jeu par rapport à l'évidement (18) et la zone de col (60) selon un ajustement sans jeu dans l'évidement (18).

8. Porte-objets selon l'une quelconque des revendications précédentes, **caractérisé en ce que** l'élément de restauration dentaire (26) peut être retenu dans l'adaptateur (10) de manière imperdable lors de la manipulation sans contact et peut être détaché en faisant pivoter l'adaptateur (10) par rapport à l'élément de restauration dentaire (26) après une introduction dans une cavité d'une dent à remplir au moyen d'une pression latérale dans ou contre la cavité.

9. Porte-objets selon l'une quelconque des revendications précédentes, **caractérisé en ce que** le raccord d'adaptateur est réalisé sous forme de raccord enfichable (12) pour le porte-objets (48), qui permet en particulier un raccord par enfoncement forcé entre l'adaptateur (10) et le porte-objets (48).

10. Porte-objets selon l'une quelconque des revendications précédentes, **caractérisé en ce qu'**un raccord enfichable (12) entre l'adaptateur (10) et le porte-objets (48) permet deux positions d'insertion, qui sont décalées l'une par rapport à l'autre en particulier d'environ 180°.

11. Porte-objets selon l'une quelconque des revendications précédentes, **caractérisé en ce que** le porte-objets (48) est réalisé dans une matière indéformable, qui est en particulier plus rigide que la matière de l'adaptateur (10), et présente une poignée, une section antérieure du porte-objets étant coudée par rapport à la poignée, en particulier selon un angle d'environ 70°.

12. Dispositif de conditionnement pour loger une pluralité d'éléments de restauration dentaire, dans lequel chaque élément de restauration dentaire (26) présente une protubérance de retenue (58) qui est destinée au logement dans un évidement (18) d'un adaptateur (10), l'adaptateur (10) présentant, au niveau de son extrémité opposée, un raccord enfichable (12) qui peut être libéré de manière sélective par l'intermédiaire d'une boîte de conditionnement (30), et pouvant être assemblé de manière amovible avec un porte-objets (48), et la boîte de conditionnement (30) présentant plusieurs logements individuels (40) sous la forme de niches et une unité composée d'un élément de restauration dentaire (26) et d'un adaptateur (10) pouvant être logée dans chaque logement individuel (40).

13. Dispositif de conditionnement selon la revendication 12, **caractérisé en ce que** la boîte de conditionnement (30) est réalisée sous forme de boîte annulaire sur la circonférence de laquelle sont formés les logements individuels (40).

14. Dispositif de conditionnement selon l'une quelconque des revendications 12 ou 13, **caractérisé en ce que** la boîte de conditionnement (30) présente un couvercle (32), qui libère de manière sélective une unité composée d'un adaptateur (10) et d'un élément de restauration dentaire (26) par l'intermédiaire d'une ouverture de retrait (38), tandis que les autres unités sont recouvertes.

15. Dispositif de conditionnement selon la revendication 14, **caractérisé en ce que** le couvercle (32) de la boîte de conditionnement (30) peut tourner dans une position, dans laquelle s'étend une zone sans logement individuel (42) de la boîte de conditionnement (30) au-dessous de l'ouverture de retrait (38).

16. Dispositif de conditionnement selon l'une quelconque des revendications 12 à 15, **caractérisé en ce que** l'adaptateur (10) s'appuie dans la boîte de conditionnement (30) et que l'élément de restauration dentaire (26) est logé sans contact dans une niche, en particulier dans un logement individuel.

17. Dispositif de conditionnement selon la revendication 16, **caractérisé en ce que** la boîte de conditionnement (30) présente des surfaces d'appui (46) coniques ou s'étendant en biais vers le haut pour l'adaptateur (10) et que l'adaptateur (10) présente des surfaces d'appui correspondantes.

18. Dispositif de conditionnement selon l'une quelconque des revendications, 12 à 17, **caractérisé en ce que** chaque adaptateur (10) présente une telle structure au niveau du raccord (12) pour le porte-objets (48) et au niveau de l'évidement (18) pour l'élément de restauration dentaire (26) telle que la force de retenue exercée sur le porte-objets (48) est toujours supérieure à la force de retenue exercée sur l'élément de restauration dentaire (26).

19. Dispositif de conditionnement selon l'une quelconque des revendications 12 à 18, **caractérisé en ce que** le raccord (12) de l'adaptateur (10) est destiné à l'insertion dans un évidement pour raccord (50) du porte-objets (48) et qu'il est pourvu en particulier d'un chanfrein d'insertion (52).

20. Dispositif de conditionnement selon l'une quelconque des revendications 12 à 19, **caractérisé en ce que** l'adaptateur (10) est introduit à l'état pré-assemblé conjointement avec l'élément de restauration dentaire (26) dans le dispositif de conditionnement et en particulier qu'ils présentent des codes couleur pour indiquer la forme et/ou la couleur de l'élément de restauration dentaire (26).

21. Dispositif de conditionnement selon l'une quelconque des revendications 12 à 20, **caractérisé en ce que** chaque élément de restauration dentaire (26) ne peut être retiré qu'à l'aide d'un porte-objets (48).
